(19) Europäisches Patentamt European Patent Office Office européen des brevets

(11) **EP 3 421 660 B1**

(12) **FASCICULE DE BREVET EUROPEEN**

(45) Date de publication et mention de la délivrance du brevet:
**19.08.2020 Bulletin 2020/34**

(21) Numéro de dépôt: **18180327.1**

(22) Date de dépôt: **28.06.2018**

(51) Int Cl.:
*D06M 13/00* *(2006.01)*    *D06M 13/148* *(2006.01)*
*D06M 13/402* *(2006.01)*    *D06M 16/00* *(2006.01)*
*D06M 23/06* *(2006.01)*    *A01N 31/06* *(2006.01)*
*A01N 37/46* *(2006.01)*    *A01N 25/34* *(2006.01)*
*A01N 65/00* *(2009.01)*    *A01N 65/28* *(2009.01)*
*D06M 13/419* *(2006.01)*    *D06M 101/06* *(2006.01)*

(54) **TEXTILE REPULSIF ANTI-MOUSTIQUE A EFFET LONGUE DUREE**

MÜCKENABWEISENDE TEXTILIE MIT LANGZEITWIRKUNG

LONG-LIFE MOSQUITO REPELLENT TEXTILE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.06.2017 FR 1755958**

(43) Date de publication de la demande:
**02.01.2019 Bulletin 2019/01**

(73) Titulaire: **Envirotech**
**42320 Saint Christo en Jarez (FR)**

(72) Inventeur: **VILLARD, Emmanuel**
**42320 SAINT-CHRISTO-EN-JAREZ (FR)**

(74) Mandataire: **Regimbeau**
**20, rue de Chazelles**
**75847 Paris Cedex 17 (FR)**

(56) Documents cités:
**EP-A1- 3 175 865**    **WO-A1-2014/200378**
**WO-A2-2014/200377**    **FR-A1- 3 040 260**
**US-A1- 2007 079 447**

• **DATABASE WPI Week 201729 Thomson Scientific, London, GB; AN 2017-18092S XP002778818, & CN 106 480 740 A (WUXI CHANGAN SHUGUANG GLOVES FACTORY) 8 mars 2017 (2017-03-08)**

**EP 3 421 660 B1**

**Description**

La présente invention a pour objet l'utilisation d'un répulsif insectifuge choisi parmi l'huile d'eucalyptus citronnée et /ou l'éthyl 3-[acetyl(butyl)amino]propanoate pour obtenir en un unique traitement un textile à effet insectifuge efficace pendant au moins 12 heures, le répulsif insectifuge étant présent dans le textile à raison de 700 à 3 000 mg/m$^2$.

La présente invention a également pour objet un textile imprégné d'un répulsif insectifuge choisi parmi l'huile d'eucalyptus citronnée et/ou l'éthyl 3-[acetyl(butyl)amino]propanoate, son procédé de fabrication et l'utilisation de ce textile comme protection contre les insectes ou les acariens.

Les piqures d'insectes et de moustiques en particulier sont des vecteurs de maladies potentiellement graves pour l'homme dans de nombreux pays. Ces maladies peuvent prendre des formes chroniques et même être mortels, comme par exemple, la malaria (paludisme). Le paludisme est dû à un parasite, le Plasmodium, transmis par les moustiques (de type anophèle) qui en sont porteurs. Chez l'être humain, ces parasites se multiplient dans le foie puis s'attaquent aux globules rouges. Le paludisme se manifeste par de la fièvre, des maux de tête et des vomissements. Ces symptômes apparaissent généralement dix à quinze jours après la piqûre de moustique. En l'absence de traitement, le paludisme peut entraîner rapidement le décès par les troubles circulatoires qu'il provoque. Dans de nombreuses régions du monde, les parasites sont devenus résistants à plusieurs médicaments antipaludéens.

Les principales mesures de lutte contre le paludisme prévoient : un traitement rapide et efficace par des associations médicamenteuses comportant de l'artémisinine, l'utilisation de moustiquaires imprégnées d'insecticide et la pulvérisation d'insecticide à effet rémanent à l'intérieur des habitations pour lutter contre les moustiques vecteurs. Même si des progrès considérables ont été réalisés au cours de la dernière décennie, la transmission perdure dans 99 pays, et l'on estime que la maladie a fait 655 000 victimes en 2010, pour la plupart des enfants de moins de 5 ans.

D'autres maladies comme la dengue et le chikungunya, qui sont des arboviroses tropicales sont transmises par des moustiques du genre Aedes. Introduit en France métropolitaine en 2004 dans les Alpes-Maritimes, le moustique vecteur Aedes albopictus (appelé également moustique tigre) est, en 2014, présent dans de nombreux départements (Alpes-Maritimes, Alpes-de-Haute-Provence, Var, Haute-Corse, Corse-du-Sud, Bouches-du-Rhône, Vaucluse, Gard, Hérault, Aude, Pyrénées Orientales, Haute-Garonne, Lot-et-Garonne, Gironde, Drôme, Ardèche, Isère et Rhône) et sa zone d'implantation est en expansion constante. Elles sont en progression constante dans le monde. L'Organisation mondiale de la santé estime de 50 à 100 millions le nombre annuel de cas de dengue, dont l'incidence a été multipliée par 30 au cours des cinquante dernières années.

D'autres parasites peuvent être vecteurs de maladies. Les Ixodida, plus connus sous l'appellation « Tique » sont des acariens pouvant transmettre des virus, bactéries ou autres agents pathogènes à leur hôte. La maladie de Lyme est une maladie bactérienne très courante transmise par les tiques à l'homme. Cette maladie est en plein essor en particulier en Europe.

Parmi les outils efficaces de luttes contre ces maladies vectorielles, l'utilisation d'insecticide et/ou répulsif insectifuge appliqué sur des tissus de protection (moustiquaires) ou des vêtements est une solution qui a démontré son efficacité depuis très longtemps. Les autorités françaises recommandaient d'ailleurs, jusqu'à présent, certains produits à base d'insecticide tels que la perméthrine ou la deltaméthrine pour des applications sur textile, ou à base de répulsifs (DEET (N,N-Diéthyl-3-méthylbenzamide), IR3535® (Ethyl 3-[acetyl(butyl)amino]propanoate), icaridine, le p-Menthane-3,8-diol, etc...) pour une application cutanée.

Les produits connus seulement répulsifs, appliqués sur la peau, ont généralement un effet limité dans le temps, généralement de 4 à 10 heures selon les molécules et nécessitent un renouvellement de leur application plus ou moins fréquente. Ceci n'est pas l'idéal en particulier lorsque la protection doit être efficace la nuit. De plus il est difficile de contrôler le dosage sur la peau du produit répulsif car celui-ci est en partie absorbé par l'épiderme, ou étalé de manière non homogène par l'utilisateur, ce qui résulte en une baisse d'efficacité.

Par ailleurs, il est indispensable de prendre en compte la toxicité de ces substances répulsives, qui peuvent être appliquées de façon répétée sur le corps pour être efficace. Il est nécessaire de trouver les meilleures solutions de protection contre les insectes, les tiques, et autres parasites vecteurs de maladie, tout en limitant les risques d'exposition du sujet traité à des substances pouvant présenter des risques. Les enfants, et en particulier les enfants en bas âge, sont particulièrement exposés aux maladies vectorielles. Par ailleurs, compte tenu de leur ratio surface corporel / poids corporel beaucoup plus élevé que celui d'un adulte, et de leur peau particulièrement fine et perméable, il est particulièrement important de développer les solutions de protection les plus efficaces et les plus sures. A titre de comparaison, le DEET, substance synthétique la plus fréquemment utilisée comme substance répulsive en application cutanée, a été souvent mis en cause lors d'étude scientifique pour ses effets secondaires en particulier chez les enfants.

L'application cutanée d'une substance favorise bien évidemment sa pénétration dans l'organisme. Il sera donc souhaitable de favoriser l'application de substances répulsives plutôt sur un textile de protection, un vêtement, pour éviter le contact direct de la substance avec la peau. Par exemple, FR 3 040 260 divulgue un répulsif en spray à pulvériser notamment sur des textiles, le répulsif étant un mélange d'huile essentielle de lavandin et de p-menthane-3,8-diol (molécule notamment présente dans l'huile d'eucalyptus). Un autre exemple est CN 106 480 740, qui décrit l'utilisation d'une composition répulsive à base d'huiles essentielles dont l'huile d'eucalyptus sur des textiles pour son effet répulsif vis-à-vis des moustiques. L'application du produit répulsif sur une surface textile avec un temps de latence entre l'application et l'utilisation permet également de d'éviter le contact avec la peau de certains solvants présents dans le produit répulsif, par exemple l'éthanol. Ce type de solvant peut favoriser la pénétration du produit répulsif dans la peau.

Concernant les produits insecticides, de nombreuses molécules sont efficaces mais beaucoup ne sont pas stables et se dégradent rapidement (par exemple aux UV). Parmi les molécules insecticides suffisamment stables pour obtenir une rémanence de l'effet sur plusieurs mois, il est possible de citer entre autre la perméthrine et la deltaméthrine. Cette dernière possède une efficacité insecticide plus élevée que la perméthrine mais a également un profil toxicologique beaucoup moins favorable que la perméthrine. La perméthrine est donc une molécule particulièrement intéressante qui présente une efficacité insecticide élevée, une rémanence sur une longue période, et une plus faible toxicité pour les animaux à sang chaud. La perméthrine est une substance utilisée depuis longtemps pour le traitement des tissus et autres vêtements pour leur conférer des propriétés antimoustiques.

Malgré ce profil toxicologique plus favorable de la perméthrine, il est nécessaire de réduire les risques de transferts de substance du tissu vers la peau afin de ne pas dépasser les seuils d'exposition pouvant représenter un danger. La fixation de la perméthrine sur le textile est une solution pour réduire le risque toxicologique.

La perméthrine et les pyréthinoides en général présentent également un profil écotoxicologique très peu favorable et ont un impact en particulier sur les organismes aquatiques à des concentrations extrêmement faibles. Il est donc important de limiter les rejets dans l'environnement. Même si l'efficacité de la perméthrine n'est plus à démontrer, il subsiste donc un problème majeur de relargage de la molécule lors des lavages des tissus imprégnés (moustiquaires, vêtements ou autres).

Ce problème de relargage a été nettement amélioré pour des tissus imprégnés de manière industrielle. En effet, l'application industrielle permet l'utilisation de liants qui sont activés par une étape de chauffage à température élevée. Plusieurs brevets sur le sujet ont été publiés et proposent des solutions intéressantes. Néanmoins parmi les différentes solutions de fixation de perméthrine sur les textiles proposées, aucune solution, y compris par un procédé de fixation industriel, n'a permis de fixer de façon suffisamment efficace la perméthrine pour réduire le risque pour l'environnement à un niveau acceptable. Lors du lavage des textiles, au moins une partie de la perméthrine est relarguée dans les eaux usées.

Dans le cas de solutions appliquées en vaporisateur ou autres procédés par l'utilisateur final, la fixation est nettement plus délicate. Il n'existe pas à ce jour de solution satisfaisante.

Par ailleurs, la résistance aux insecticides est de plus en plus répandue et on rapporte qu'elle touche désormais près des deux tiers des pays où la transmission persiste. Elle concerne toutes les principales espèces de vecteurs et toutes les classes d'insecticides.

Toutes les moustiquaires à imprégnation durable (MID) actuellement recommandées sont traitées aux pyréthrinoïdes. Du point de vue de l'innocuité comme de l'efficacité, ces derniers sont les meilleurs insecticides à avoir jamais été développés pour un usage en santé publique. Ce sont ces produits qui ont été appliqués pour la majorité des pulvérisations intradomiciliaires à effet rémanent (PID) dans le monde en 2009 et ce sont également eux qui ont été utilisés pour toutes les MID. On estime par exemple qu'avec leur couverture actuelle, les moustiquaires à imprégnation durable (MID) et les pulvérisations intradomiciliaires à effet rémanent (PID) en Afrique ont permis d'éviter chaque année 220 000 décès d'enfants de moins de 5 ans. Si les pyréthrinoïdes venaient à perdre l'essentiel de leur efficacité, plus de 55% des résultats de la lutte antivectorielle disparaîtraient, ce qui aboutirait à environ 120 000 décès qui ne pourraient plus être évités. Si l'on parvenait à une couverture universelle de la lutte antivectorielle, un tel niveau de résistance aux insecticides serait encore plus dommageable en cas d'échec des pyréthrinoïdes : on recenserait alors chaque année environ 260 000 décès d'enfants de moins de 5 ans qui ne pourraient plus être évités.

Il est donc extrêmement important de trouver de nouvelles solutions pour maintenir l'efficacité des insecticides dans la durée.

Par ailleurs, il est important de préciser qu'une part significative des piqures de ces parasites vecteurs de maladie, se fait au travers de vêtement.

Il est donc devenu nécessaire de développer de nouvelles solutions permettant de palier les inconvénients des solutions existantes et de protéger l'homme ou l'animal contre les piqures d'insectes, d'acariens et de parasites, potentiellement vecteurs de maladie vectorielle, pendant une durée d'au moins 12 heures, voire 24 heures avec un seul traitement, sans risque inacceptable pour l'homme ou l'animal, sans risque inacceptable pour l'environnement.

La demanderesse a trouvé de manière surprenante que l'utilisation d'un répulsif insectifuge choisi parmi l'huile d'eucalyptus citronnée et/ou l'éthyl 3-[acetyl(butyl)amino]propanoate permet d'obtenir en un unique traitement un effet insectifuge efficace pendant au moins 12 heures lorsqu'il est appliqué sur un textile, le répulsif insectifuge étant présent dans le textile à raison de 700 à 3 000 mg/m$^2$.

Ainsi l'utilisation de ce textile permet de résoudre les problèmes cités ci-dessus.

Par le terme « insectifuge », il faut comprendre au sens de l'invention la capacité à repousser les acariens et les insectes. Ainsi les acariens et les insectes n'atterrissent pas, n'explore pas, et ne pique pas la peau animale.

Par l'expression « répulsif insectifuge », il faut comprendre au sens de l'invention un produit présentant la capacité à repousser les acariens et les insectes.

Il est indistinctement utilisé au sens de la description insectifuge, caractère insectifuge répulsif ou répulsif insectifuge.

Avantageusement l'invention propose une efficacité longue durée, en un seul traitement c'est-à-dire une application unique du répulsif insectifuge. Ainsi il n'est pas nécessaire de répéter l'application du répulsif insectifuge pour obtenir un effet insectifuge efficace pendant au moins 12 heures, voire pendant 24 heures, 72 heures et jusqu'à 7 jours alors que l'application du même répulsif insectifuge sur la peau ne permet pas d'obtenir un effet au-delà de 6 à 10 heures.

La présente invention a pour objet l'utilisation d'un répulsif insectifuge choisi parmi l'huile d'eucalyptus citronnée et/ou l'éthyl 3-[acetyl(butyl)amino]propanoate pour obtenir en un unique traitement un textile à effet insectifuge efficace pendant au moins 12 heures, le répulsif insectifuge étant présent dans le textile à raison de 700 à 3 000 mg/m$^2$.

L'huile d'eucalyptus citronnée est connue depuis longtemps pour ses propriétés répulsives. Elle peut être appliquée sur la peau ou sur les textiles. Elle est obtenue à partir des feuilles d'eucalyptus citronnée, et est composée majoritairement de para-menthane 3,8diol (PMDRBO), substance répulsive particulièrement efficace. Du fait que les atomes de carbone 1, 2 et 5 soient asymétriques, il existe 8 stéréoisomères répartis en quatre paires d'énantiomères, de ce composé.

L'huile d'eucalyptus citronné comprend environ 50 à 80% massique de para-menthane-3,8 diol. Ainsi il y aura entre 1.0 et 1.6% de para-menthane-3-8 diol dans 2% d'huile d'eucalyptus citronnée.

L'huile d'eucalyptus citronnée est également appelée huile d'eucalyptus citriodora hydratée, cyclisée.

L'éthyl 3-[acetyl(butyl)amino]propanoate est connue pour ces propriétés répulsives sous le nom de IR3535®.

Avantageusement l'éthyl 3-[acetyl(butyl)amino]propanoate mis en œuvre selon l'invention possède des fonctions libres, en particulier sa fonction amine est libre. L'éthyl 3-[acetyl(butyl)amino]propanoate n'est lié à aucun silane et n'est pas encapsulé.

L'huile d'eucalyptus citronnée et l'éthyl 3-[acetyl(butyl)amino]propanoate sont connus pour leurs propriétés répulsives mais également pour leur faible toxicité. L'huile d'eucalyptus citronnée présente également une odeur agréable. Il est très important pour obtenir la protection souhaitée de traiter la totalité et de façon homogène la surface textile. L'odeur du textile traité ne doit pas être trop forte et incommodante mais l'odeur légère de l'huile d'eucalyptus citronné sur la surface textile peut permettre de contrôler facilement le traitement du textile.

En application cutanée, l'huile d'eucalyptus citronné ou l'éthyl 3-[acetyl(butyl)amino]propanoate permet d'obtenir une protection de quelques heures. Pour obtenir une efficacité pour une dizaine d'heures, il est nécessaire de répéter l'application du répulsif insectifuge sur la peau.

De façon surprenante, il a été identifié un domaine de dosage surfacique des matières textiles entre 700mg/m$^2$ et 3 000mg/m$^2$ d'huile d'eucalyptus citronné ou d'éthyl 3-[acetyl(butyl)amino]propanoate qui permet de répondre à l'ensemble des exigences recherchées, à savoir, une protection insectifuge, en particulier antimoustique et autres parasites responsables des maladies vectorielles, d'au moins 12 heures, plus particulièrement d'au moins 24 heures jusqu'à une semaine avec une seule application, sans impact esthétique inacceptable des textiles traités (pas de taches grasses), sans impact olfactif inacceptable des textiles traités. L'odeur légère permet un contrôle rapide du traitement.

L'utilisation selon l'invention en un unique traitement permet d'éviter les applications fréquentes et répétées sur la peau.

Avantageusement l'utilisation selon l'invention permet de maintenir un effet insectifuge efficace pendant au moins 24 heures, de préférence pendant au moins 72 heures et plus préférentiellement jusqu'à 7 jours. Il est à noter que le réulsif insectifuge utilisé selon l'invention est efficace dès qu'il est déposé sur le textile, et qu'il ne necessite pas d'étape de déclenchement, comme par exemple le besoin de frotter le textile, pour agir.

Avantageusement, le répulsif insectifuge mis en oeuvre selon l'invention est utilisé tel quel sur le textile sans être encapsulé ou contenu dans des particules, capsules ou autre vecteurs.

Le répulsif insectifuge utilisé selon l'invention est présent dans le textile à raison de 700 à 3 000 mg/m$^2$, préférentiellement de 850 à 2 800 mg/m$^2$, plus préférentiellement à raison de 1000 à 2 500 mg/m$^2$, encore plus préférentiellement 1500 à 2 700 mg/m$^2$.

Lorsque le répulsif insectifuge utilisé selon l'invention est l'huile d'eucalyptus citronnée, celle-ci comprend généralement de 50 à 80 % massique de p-menthane-3,8-diol.

Avantageusement, l'utilisation selon l'invention permet de maintenir un effet insectifuge efficace contre les insectes ou les acariens, en particulier les tiques ou les moustiques tels que ceux du genre Aedes, par exemple Aedes aegypti ou Aedes albopictus.

La présente invention a également pour objet un textile imprégné de 700 à 3000 mg/m$^2$ d'huile d'eucalyptus citronnée et / ou d'éthyl 3-[acetyl(butyl)amino]propanoate.

Le traitement des textiles peut permettre de protéger quasiment toute la surface du corps. L'exposition aux insectes et autres parasites responsables des maladies vectorielles est généralement fréquente en période estivale, et un choix adapté de textile doit également permettre d'avoir un bon confort, en particulier pendant les périodes chaudes.

Les textiles seront de préférence des matières permettant un séchage rapide.

Le textile permet avantageusement d'augmenter le dosage du produit répulsif sans avoir l'inconvénient d'exposer la peau des personnes à des dosages présentant un danger pour sa santé.

Le textile permet comme autre avantage un maintien du dosage du produit répulsif dans le textile car celui-ci n'est pas ou beaucoup moins absorbé par la peau car il n'est pas en contact direct avec la peau.

De préférence, le textile selon l'invention est imprégné de 850 à 2 800 mg/m² d'huile d'eucalyptus citronnée et/ou d'éthyl 3-[acetyl(butyl)amino]propanoate, préférentiellement de 1 000 à 2 500 mg/m², plus préférentiellement de 1200 à 2 500 mg/m², encore plus préférentiellement 1500 à 2 700 mg/m².

Le textile selon l'invention est imprégné d'huile d'eucalyptus citronnée comprenant généralement de 50 à 80 % massique de p-menthane-3,8-diol R, de préférence 55 à 75 %.

L'éthyl 3-[acetyl(butyl)amino]propanoate est un produit de synthèse, de préférence utilisé selon l'invention en solution ou dispersion de concentration de 2 à 10 % massique.

Par le terme « textile », il faut comprendre au sens de l'invention un matériau obtenu par tissage, tricotage ou un procédé de fabrication de textile non tissé. Ce textile peut être obtenu à partir de fils ou de fibres naturelles ou non, par exemple en coton, chanvre, lin, laine ou encore synthétiques tels le nylon, le polyamide, le polyester ou la viscose. Les termes textile et tissu sont utilisés indistinctement.

Les textiles selon l'invention incluent les textiles traditionnels. Il s'agit surtout des textiles du domaine de la mode, souvent du vêtement, mais aussi de l'ameublement (draps, tentures, rideaux, nappes, serviettes, tapisseries).

Les textiles selon l'invention incluent également les textiles techniques, c'est-à-dire les textiles pour lesquels les caractéristiques mécaniques, chimiques, physico-chimiques sont importantes et ayant une application technique : géotextile, textile médical, matériaux composites à renfort textile.

De préférence, le textile choisi selon l'invention est fabriqué à partir de fibres naturelles d'origine végétale (modifiées ou non), telles que le coton, le lin, le chanvre, la viscose et/ou à partir de fibres naturelles d'origine animale (modifiées ou non) tels que la laine, la soie et/ou à partir de fibres synthétiques telles que le polyamide, le polyester, le nylon, l'acrylique, l'élasthane, le lycra. Le textile peut être fabriqué à partir de fil(s)/fibre(s) réalisé(s) à partir d'une ou plusieurs fibres. Le textile peut être réalisé à partir d'un ou plusieurs fils.

De préférence, le textile selon l'invention est choisi parmi le polyamide, le lin, le chanvre, le polyester, le nylon, l'acrylique, l'élasthane, le lycra, le coton, la soie, la viscose, le modal, le cupro, l'acétate de cellulose et leurs mélanges.

De préférence, le textile selon l'invention présente une masse surfacique de 5 à 1 000 g/m², de préférence de 20 à 500 g/m².

Pour obtenir une efficacité totale, il sera indispensable de traiter la totalité de la surface du textile. La solution de traitement aura de préférence une teneur en huile d'eucalyptus citronné et/ou en éthyl 3-[acetyl(butyl)amino]propanoate comprise de 2 à 35% massique, plus particulièrement de 2 à 10% massique, afin de pouvoir répartir de façon homogène la substance active sur la surface textile.

Pour des concentrations en substance répulsive supérieures à 10% massique, la solution de traitement sera de préférence appliquée par un système capable de former un cône de pulvérisation plus large pour obtenir le dosage surfacique désiré.

La solution ou dispersion de répulsif insectifuge utilisée selon l'invention peut comprendre un milieu physiologiquement acceptable, en général à base d'eau ou de solvant, par exemple des alcools, des éthers ou des glycols ou leurs mélanges.

La solution ou dispersion de répulsif insectifuge utilisée selon l'invention peut comprendre des agents tensioactifs, des conservateurs, des agents stabilisants, des émulsifiants, des épaississants, d'autres principes actifs conduisant à un effet complémentaire ou éventuellement synergique, des oligo-éléments, des huiles essentielles, des parfums, des colorants, du collagène, des filtres chimiques ou minéraux, des agents hydratants ou des eaux thermales ou leurs mélanges.

De préférence, la solution ou dispersion de répulsif insectifuge utilisée selon l'invention peut comprendre un agent anti UV en mélange avec le produit répulsif.

Selon une variante, la solution ou dispersion de répulsif insectifuge utilisée selon l'invention ne comprend aucun autre composé à titre de répulsif, d'insectifuge ou d'insecticide.

Selon une variante, la solution ou dispersion de répulsif insectifuge utilisée selon l'invention ne comprend que de l'huile d'eucalyptus citronnée et/ou d'éthyl 3-[acetyl(butyl)amino]propanoate à titre de répulsif insectifuge, et ne comprend aucun autre composé à titre de répulsif, d'insectifuge ou d'insecticide.

Selon une variante, la solution ou dispersion de répulsif insectifuge utilisée selon l'invention est constituée d'huile d'eucalyptus citronnée et/ou d'éthyl 3-[acetyl(butyl)amino]propanoate à titre de répulsif insectifuge.

La présente invention se rapporte également à un procédé de réalisation d'un textile selon l'invention comprenant les étapes suivantes :

- disposer d'un textile ;

- mettre en contact ce textile avec une solution ou une dispersion concentrée de 2 à 35% massique en huile d'eucalyptus citronnée et /ou en éthyl 3-[acetyl(butyl)amino]propanoate à raison de 2 à 150 mL de solution ou dispersion / $m^2$, de préférence de 2,8 à 125 mL/$m^2$, pour obtenir un textile imprégné de 700 à 3 000 mg/$m^2$ d'huile d'eucalyptus citronnée et/ou d'éthyl 3-[acetyl(butyl)amino]propanoate.

Par dispersion, il faut comprendre au sens de l'invention, un milieu continu, par exemple un solvant, dans lequel la substance active n'est pas en solution mais est dispersée sous forme de particules dans le milieu continu.

Par solution, il faut comprendre au sens de l'invention, un milieu continu, par exemple un solvant comme l'eau ou l'éthanol, dans lequel la substance active est en solution.

De préférence, la solution mise en œuvre selon le procédé de l'invention est une solution aqueuse.

Avantageusement, la solution ou dispersion mise en œuvre selon le procédé de ne comprend pas de capsules ou de véhicules solides encapsulant l'huile d'eucalyptus citronnée et /ou en éthyl 3-[acetyl(butyl)amino]propanoate.

La mise en contact du procédé selon l'invention peut être réalisée par pulvérisation sur le textile ou par trempage du textile. Le pulvérisateur est généralement équipé d'une valve en sortie permettant de créer et diffuser des particules fines, de préférence de dimension supérieure à 10 microns, et de préférence de dimension supérieure à 50 microns. Le pulvérisateur peut être de tout type :

◦ par exemple de type aérosol avec un gaz propulseur du type azote ou hydrocarbures (butane, propane, etc...) créant une pression à l'intérieur du flacon ;

◦ par exemple de type « Bag on Valve », le gaz propulseur dans ce cas, n'est pas en contact avec le produit diffusé qui se trouve dans une poche à l'intérieur du flacon. Le gaz propulseur se situe dans le flacon mais à l'extérieur de la poche.

◦ Par exemple de type pulvérisateur avec mise en pression par une pompe manuelle.

La solution ou la dispersion d'huile d'eucalyptus citronnée et/ou d'éthyl 3-[acetyl(butyl)amino]propanoate est de préférence appliquée à raison de 0,2 à 5 mL/ de solution ou dispersion / 75 à 1 200 $cm^2$ de surface à chaque vaporisation.

De préférence, la mise en contact du procédé selon l'invention est réalisée avec une solution ou une dispersion d'huile d'eucalyptus citronnée et/ou d'éthyl 3-[acetyl(butyl)amino]propanoate. La teneur en huile d'eucalyptus citronnée et/ou d'éthyl 3-[acetyl(butyl)amino]propanoate dans la solution ou la dispersion selon l'invention est comprise de préférence entre 2 et 35% massique, et de préférence entre 2 et 25% massique et plus particulièrement de 2 à 10% massique.

De préférence, la mise en contact du procédé selon l'invention est réalisée à une distance comprise de 15 à 30 cm, de préférence de 18 à 25 cm, plus particulièrement à environ 20 cm du textile.

Le procédé selon l'invention peut également comprendre un traitement contre les UVs avant ou simultanément la mise en contact. En effet, les textiles traités répulsif moustique/tique sont principalement utilisés en période estivale, période pendant laquelle il est également utile de se protéger contre les rayonnements UV. Il est donc très utile de proposer des textiles traités pour protéger les utilisateurs contre les moustiques/tiques et également contre les rayonnements UV. Cette propriété anti-UV est par exemple obtenue par l'application sur le textile de filtres minéraux de type oxyde de zinc ou oxyde de titane.

Selon une première variante, ces traitements anti UV peuvent être appliqués au textile par exemple de façon industrielle avant le traitement antimoustique. Ces composés anti-UV peuvent être fixés sur le textile en utilisation un liant.

Selon une deuxième variante, les traitements antimoustique/antitique et anti UV peuvent également être appliqués simultanément par le consommateur, c'est-à-dire en même temps que l'utilisation selon l'invention.

Selon une troisième variante, ces traitements anti UV peuvent être appliqués au textile selon l'invention après l'utilisation selon l'invention.

La présente invention se rapporte également à une utilisation du textile selon l'invention pour réaliser un vêtement, une casquette, un chapeau, un tour de cou, une chaussette, un manchon, un bracelet, un foulard, une chaussure, un bonnet, un paréo, une paire de gants, une étole, une toile de tente, une bâche, une couverture, un drap, une nappe, une ombrelle, un parasol, une tenture, un rideau, une nappe, une serviette.

La présente invention se rapporte également à une utilisation d'un textile imprégné de 700 à 3 000mg/$m^2$ d'huile d'eucalyptus citronnée et/ou d'éthyl 3-[acetyl(butyl)amino]propanoate comme protection contre les insectes ou les acariens, en particulier les moustiques tels que ceux du genre Aedes, par exemple Aedes aegypti ou Aedes albopictus.

La présente invention se rapporte également à une utilisation d'un textile imprégné de 700 à 3 000mg/$m^2$ d'huile d'eucalyptus citronnée et/ou d'éthyl 3-[acetyl(butyl)amino]propanoate comme répulsif contre les insectes ou les acariens, en particulier les moustiques tels que ceux du genre Aedes, par exemple Aedes aegypti ou Aedes albopictus.

Il est à noter au sens de la présente invention que le dosage de 700 à 3 000 mg/$m^2$ est indiqué pour la période d'utilisation du textile pour son effet insectifuge. Il s'agit de la dose efficace.

**EXEMPLES**

**1 - Tests d'efficacité anti-moustiques** :

**Protocole**

Le protocole de test a été adapté à partir de celui publié par l'agence américaine de protection de l'environnement dans les directives d'évaluation de la performance: OPPTS 810.3700: répulsif d'insecte à application sur la peau humaine.

L'objectif de l'étude était d'évaluer le caractère insectifuge d'échantillon imprégné de produit répulsif contre le moustique Aedes aegypti en utilisant le test « *technique du bras en cage* ».

Le moustique nommé Aedes aegypti fait partie du règne animal, de l'embranchement des arthropodes, de la classe des insectes, de l'ordre des diptères, de la famille des Culicidae, du genre des Aedes, et du sous-genre Aedes (Stegomya).

Espèce : Aedes aegypti

Nombre de répétition du test: 1

Nombre de moustiques par répétition : 100 moustiques

Durée du test: 5 minutes

La piqure se réfère à un insecte pénétrant la peau avec ses appendices buccaux et ingérant le sang.

La première piqure (PM) se réfère à la première piqure reçue par le volontaire sur la zone test exposée de l'avant-bras à des insectes de test.

L'atterrissage se réfère à un insecte qui atterrit sur la zone test exposée de l'avant-bras, mais n'explore pas ou ne pique pas.

L'exploration (aussi appelé sondage) se réfèrent à un atterrissage d'insecte suivi d'une pénétration dans la peau avec ses appendices buccaux, sans ingérer le sang.

Le temps de protection (TP) se réfère au temps écoulé entre l'application du répulsif et la première piqure (PM). C'est la période d'efficacité du répulsif.

Le caractère insectifuge se réfère à un manque d'exploration ou de piqures de la part de l'insecte ou de l'acarien sur la peau humaine alors que le répulsif est présent.

Espèce - une femelle moustique Aedes aegypti âgée de 5 jours.

Le pourcentage d'efficacité insectifuge est calculé de la façon suivante :

% efficacité insectifuge = (nombre de moustiques éloigné de l'avant-bras ou au sol mais non tué X 100 / nombre de moustiques libérés dans la chambre de test)

La cage aux moustiques : le test est conduit dans une chambre de test avec des parois de type moustiquaire :

☐ hauteur de la cage : 50 cm

☐ largeur de la cage : 50 cm

☐ longueur de la cage : 50 cm.

Les larves ou les nymphes sont élevées en conditions optimales à 27 $\pm$ 2°C, en humidité relative à 80 $\pm$ 10%, et une exposition à la lumière de 16 heures et 8 heures à l'obscurité. L'alimentation des adultes est réalisée en leur fournissant du coton trempé dans une solution de sucrose à 10%. Aucun sang en guise de repas n'est donné avant le test. Les moustiques sont affamés pendant 24 heures avant le test. Les moustiques ne sont utilisés que pour 1 seul test, et sont incinérés après le test.

La cage est cubique avec une ouverture chemisée pour introduire le bras du volontaire dans la cage. Toutes les autres cotés sont constituées d'un textile de type moustiquaire. La température pendant l'essai est maintenue aux environs de 25°C à 27°C et l'humidité relative est de 60% à 80%, la lumière est allumée.

Les textiles insectifuges selon l'invention et textiles témoin sont conservés dépliés à température et humidité ambiantes avant le test.

Durant le test, les textiles testés sont enroulés autour de l'avant-bras.

Zone de test: l'avant-bras du volontaire, du poignet au coude est utilisé comme la zone de test. Avant le traitement, la zone est lavée avec un savon non parfumé et est rincée avec de l'eau, ensuite avec une solution d'éthanol à 70 % et 30 % d'eau, puis est séché avec une serviette

Nombre de volontaires : les avant-bras d'hommes et de femmes volontaires sont utilisés pour l'expérimentation. L'avant-bras droit du volontaire est recouvert d'un textile traité avec la solution insectifuge pendant que l'avant-bras gauche est recouvert d'un textile non traité, et considéré comme le contrôle (Témoin). Les volontaires n'ont pas consommés d'alcool, de caféine et de substances olfactives (par exemple parfum, eau de Cologne, laque à cheveux, spray pour cheveux lotion etc.) 12 heures avant et pendant le test.

Témoin : un contrôle négatif (témoin) non traité est utilisé pour vérifier la pression de piqure/atterrissage. Quand le textile insectifuge selon l'invention est placé sur l'avant-bras du volontaire, le témoin préféré est l'avant-bras du volontaire recouvert du textile non traité.

Laver, rincer et sécher les avant-bras témoins exactement comme les avant-bras traités.

Il est recommandé un minimum de 10 atterrissages ou explorations de moustiques pendant 30 secondes lors de l'insertion de l'avant-bras du volontaire dans la cage pour qualifier le volontaire de participant. A chaque test, un avant-bras témoin doit être inséré dans l'ouverture chemisée de la cage et être exposé aux moustiques pendant 30 secondes pour vérifier la pression de piqure. L'avant-bras est retiré de la cage test dès qu'il a reçu le nombre d'exploration nécessaire.

Préparation de l'échantillon :

Traitement d'un textile de dimension 30cm x 30cm par vaporisation homogène à environ 20 cm de distance de 2,25 g de l'échantillon à tester pour atteindre le dosage de 25 g/m$^2$.

Le textile est conservé déplié après le test à température ambiante et air ambiant.

## PROCEDURE

Evaluation de la propension des moustiques à piquer :

100 spécimens adultes femelles âgée de 5 jours et présentant une activité trophique, sont aspirées de la cage d'élevage et transférés dans la cage test 30 minutes avant chaque test. La propension des moustiques à piquer est évaluée par insertion de l'avant-bras témoin dans la cage. A chaque test, un avant-bras témoin doit être inséré à travers l'ouverture chemisée de la cage et exposé aux moustiques jusqu'à 30 secondes pour vérifier la pression de piqures. L'essai est jugé valide si les tentatives de piqures sont au-delà du minimum nécessaire. Un minimum de 10 moustiques doit être attiré, doivent atterrir et/ou piquer en 30 secondes pour utiliser ce groupe de moustiques, sinon soit le volontaire est changé soit la population de moustiques, jusqu'à ce que 10 moustiques soient attirés, atterrissent et/ou piquent en 30 secondes. Ceci est réalisé pour chaque volontaire. Ceci est appelé le témoin. Si le témoin est valide, le même volontaire expose son avant-bras traité jusqu'à la fin du test.

Test du caractère insectifuge :

Ce test est réalisé suivant la même procédure que pour le test destiné aux répulsif cutanés à la différence que la peau n'est jamais exposée aux moustiques car elle est toujours couverte par un textile traité ou non. Le textile est maintenu en place par des élastiques. Le test est réalisé en insérant l'avant-bras témoin du volontaire, dont les mains sont protégées par un gant en latex, dans la cage ; Chaque essai dure 5 minutes. Avant chaque essai, la propension des insectes à piquer un avant-bras non traité est évaluée par enregistrement des tentatives de piqures sur un volontaire.

## 2. Exemples selon l'invention

Plusieurs compositions ont été préparées à partir d'une dispersion aqueuse huile d'eucalyptus citronné fournie par la société FULLTEC contenant 20% massique de l'huile d'eucalyptus citronné.

L'huile d'eucalyptus citronné est également appelée « huile d'eucalyptus citronné hydratée, cyclisée », ou encore appelée « p-Menthane-3,8-Diol Rich Botanic Oil » ou encore « PMDRBO ».

Echantillon EC : Teneur en PMDRBO de 20% massique

Echantillon EC5 : Teneur en PMDRBO de 5% massique

Echantillon EC10 : Teneur en PMDRBO de 10% massique

Echantillon EC20 : Teneur en PMDRBO de 2% massique

Chacune des dispersions est appliquée de façon homogène sur un tissu en coton de masse surfacique 140g/m$^2$ par un vaporisateur adapté pour obtenir les concentrations surfaciques souhaitées. Le textile est traité par vaporisation homogène à environ 20 cm de distance de 2,25 g de l'échantillon à tester sur 0,09 m$^2$ de textile pour atteindre le dosage

de 25 g/m$^2$.

Tests 12H après le traitement

| Echantillon à tester | Dosage de l'échantillon sur le textile | Dosage Huile d'eucalyptus citronnée sur le textile | Test d'efficacité - 12H après le traitement | |
|---|---|---|---|---|
| en % massique d'huile d'eucalyptus citronné | g/m$^2$ | mg/m$^2$ | Nombre d'atterrissages ou de piqures sur l'avant-bras | |
| | | | Avant-bras témoin | Avant-bras traité |
| 2.0 (EC20)* | 25 | 500 | | 0-1-0-1 |
| 5.0 (EC5)* | 25 | 1250 | | 0-0-0-0 |
| 10 (EC10)* | 25 | 2500 | 68-70-68-70 | 0-0-0-0 |
| * 4 tests ont réalisés pour chaque échantillon, en prenant 2 hommes et 2 femmes | | | | |

Test 24H après le traitement

| Echantillon à tester | Dosage de l'échantillon sur le textile | Dosage Huile d'eucalyptus citronnée sur le textile | Test d'efficacité - 24H après le traitement | |
|---|---|---|---|---|
| en % massique d'huile d'eucalyptus citronné | g/m$^2$ | mg/m$^2$ | Nombre d'atterrissages ou de piqures sur l'avant-bras | |
| | | | Avant-bras témoin | Avant-bras traité |
| 2.0 (EC20)* | 25 | 500 | | - |
| 5.0 (EC5)* | 25 | 1250 | | 0-0-0-0 |
| 10 (EC10)* | 25 | 2500 | 53-59-56-6 | 0-0-0-0 |
| * 4 tests ont réalisés pour chaque échantillon, en prenant 2 hommes et 2 femmes | | | | |

Test 72H après le traitement

| Echantillon à tester | Dosage de l'échantillon sur le textile | Dosage Huile d'eucalyptus citronnée sur le textile | Test d'efficacité - 72H après le traitement | |
|---|---|---|---|---|
| en % massique d'huile d'eucalyptus citronné | g/m$^2$ | mg/m$^2$ | Nombre d'atterrissages ou de piqures sur l'avant-bras | |
| | | | Avant-bras témoin | Avant-bras traité |
| 2.0 (EC20)* | 25 | 500 | | - |
| 5.0 (EC5)* | 25 | 1250 | | 0-0-0-0 |
| 10 (EC10)* | 25 | 2500 | 48-56-62-51 | 0-0-0-0 |
| * 4 tests ont réalisés pour chaque échantillon, en prenant 2 hommes et 2 femmes | | | | |

Test 7 jours après le traitement

| Echantillon à tester | Dosage de l'échantillon sur le textile | Dosage Huile d'eucalyptus citronnée sur le textile | Test d'efficacité - 7 jours après le traitement | |
|---|---|---|---|---|
| en % massique d'huile d'eucalyptus citronné | g/m² | mg/m² | Nombre d'atterrissages ou de piqures sur l'avant-bras | |
| | | | Avant-bras témoin | Avant-bras traité |
| 2.0 (EC20)* | 25 | 500 | | - |
| 5.0 (EC5)* | 25 | 1250 | | - |
| 10 (EC10)* | 25 | 2500 | 52-50-53-56 | 0-0-0-0 |
| * 4 tests ont été réalisés pour chaque échantillon, en prenant 2 hommes et 2 femmes | | | | |

Test 30 jours après le traitement

| Echantillon à tester | Dosage de l'échantillon sur le textile | Dosage Huile d'eucalyptus citronnée sur le textile | Test d'efficacité - 30 jours après le traitement | | |
|---|---|---|---|---|---|
| en % massique d'huile d'eucalyptus citronné | g/m² | mg/m² | Nombre d'atterrissages ou de piqures sur l'avant-bras témoin | Nombre d'atterrissages sur l'avant-bras traité | Nombre de piqures sur l'avant-bras traité |
| (EC)* | 12.5 | 2500 | | 5-4-2-3 | 0-0-0-0 |
| | | | 52-50-53-56 | | |
| | | | | | |
| * 4 tests ont été réalisés pour chaque échantillon, en prenant 2 hommes et 2 femmes | | | | | |

L'huile d'eucalyptus citronné appliquée sur un tissu à un dosage surfacique compris entre 700 mg/m² et 2 500 mg/m² permet d'obtenir une protection totale sans atterrissage ni piqure en 5 minutes d'exposition de l'avant-bras en cage. Un dosage à plus de 1250 mg/m² permet d'obtenir une rémanence de l'effet d'au moins 24 heures, et jusqu'à 72 heures et de plus d'une semaine avec un dosage de 2 500 mg/m².

En comparaison aux traitements cutanés, cette rémanence de l'effet répulsif est surprenante, inattendu, exceptionnel et très intéressante.

En doublant la dose de répulsif, comparativement à une application cutanée du même répulsif, et en appliquant 1250 mg/m² de répulsif sur un textile, l'effet insectifuge est compris généralement entre 48 à 72 heures, alors qu'il est de 6 à 10 heures pour une application cutanée de 625 mg/m². Ainsi en doublant le dosage, la rémanence de l'effet insectifuge est multipliée par 7 à 8 sur un textile comparativement à l'application cutanée.

La substitution de l'huile d'eucalyptus citronné par l'éthyl 3-[acetyl(butyl)amino]propanoate ou d'un autre répulsif cutané conduit aux mêmes résultats d'efficacité aux mêmes dosages et aux mêmes échéances.

## 2 - Test de tachabilité

Sur une surface textile, il a été appliqué une dispersion aqueuse d'huile d'eucalyptus citronné. Le textile a été laissé à sécher à l'air libre et l'aspect visuel du textile a été contrôlé après 2 heures.

| Dosage surfacique d'huile sur le textile en mg/m² | Impact du traitement sur du coton (140 mg/m²) | Impact esthétique du traitement sur du lin (175 mg/m²) |
|---|---|---|
| 500 | Très bon | Très bon |

(suite)

| Dosage surfacique d'huile sur le textile en mg/m$^2$ | Impact du traitement sur du coton (140 mg/m$^2$) | Impact esthétique du traitement sur du lin (175 mg/m$^2$) |
|---|---|---|
| 1250 | Très bon | Très bon |
| 2500 | Bon | bon |
| 3000 | Bon | bon |
| 3750 | Surface tachée | Surface tachée |

Il a été observé un impact esthétique du traitement acceptable jusqu'à un dosage surfacique de 3 000 mg/m$^2$ d'huile d'eucalyptus citronnée sur chacun des textiles.

**3 - Tests olfactifs**

Nous appliquons sur une surface textile une dispersion aqueuse d'huile d'eucalyptus citronné. Nous laissons le textile sécher à l'air libre et contrôlons après 2 heures, l'odeur résiduelle.

| Dosage surfacique d'huile sur le textile en mg/m$^2$ | Impact olfactif du traitement sur du coton (140 mg/m$^2$) | Impact olfactif du traitement sur du lin (175 mg/m$^2$) |
|---|---|---|
| 500 | Odeur faible | Odeur faible |
| 1250 | Odeur légère | Odeur légère |
| 2500 | Odeur acceptable | Odeur acceptable |
| 3000 | Odeur acceptable | Odeur acceptable |
| 3750 | Odeur forte nauséabonde | Odeur forte nauséabonde |

Il a été constaté une odeur acceptable jusqu'à un dosage surfacique de 3 000 mg/m2 d'huile d'eucalyptus citronnée sur chacun des textiles.

Une solution de protection antimoustique/antitique afin de traiter un textile avec de l'huile d'eucalyptus citronnée entre 700mg/m$^2$ et 3 000mg/m$^2$ est particulièrement intéressante pour :

- Obtenir une protection totale pendant un durée supérieure à 24H, jusqu'à au moins 7 jours

- Sans impact négatif sur l'aspect esthétique du textile

- Sans impact olfactif inacceptable

- Sans risque inacceptable pour l'homme, l'animal

- Sans risque inacceptable pour l'environnement

- A partir d'une ressource renouvelable

- Permettant par l'odeur légère agréable du textile après traitement, un contrôle olfactif des surfaces traitées.

**Revendications**

1. Utilisation d'un répulsif insectifuge choisi parmi l'huile d'eucalyptus citronnée et/ou l'éthyl 3-[acetyl(butyl)amino] propanoate pour obtenir en un unique traitement un textile à effet insectifuge efficace pendant au moins 12 heures, le répulsif insectifuge étant présent dans le textile à raison de 700 à 3 000 mg/m$^2$.

2. Utilisation selon la revendication 1 **caractérisée en ce que** l'effet insectifuge est efficace pendant au moins 24 heures, et plus préférentiellement jusqu'à 7 jours.

**3.** Utilisation selon l'une quelconque des revendications précédentes **caractérisée en ce que** le répulsif insectifuge est présent dans le textile à raison de 1000 à 2 500 mg/m$^2$.

**4.** Utilisation selon l'une quelconque des revendications précédentes **caractérisée en ce que** l'huile d'eucalyptus citronnée comprend de 50 à 80 % massique de p-menthane-3,8-diol.

**5.** Utilisation selon l'une quelconque des revendications précédentes **caractérisée en ce que** l'effet insectifuge est efficace contre les insectes ou les acariens, en particulier les tiques ou les moustiques tels que ceux du genre Aedes, par exemple Aedes aegypti ou Aedes albopictus.

**6.** Textile imprégné de 700 à 3 000 mg/m$^2$ d'huile d'eucalyptus citronnée et/ou d'éthyl 3-[acetyl(butyl)amino]propanoate.

**7.** Textile selon la revendication 6 **caractérisé en ce qu'**il est imprégné de 1 000 à 2500 mg/m$^2$ d'huile d'eucalyptus citronnée et/ou d'éthyl 3-[acetyl(butyl)amino]propanoate.

**8.** Textile selon l'une quelconque des revendications 6 ou 7 **caractérisé en ce qu'**il est choisi parmi le polyamide, le lin, le chanvre, le polyester, le nylon, l'acrylique, l'élasthane, le lycra, le coton, la soie, la viscose, le modal, le cupro, l'acétate de cellulose et leurs mélanges.

**9.** Textile selon l'une quelconque des revendications précédentes 6 à 8 **caractérisé en ce qu'**il présente une masse surfacique de 5 à 1 000 g/m$^2$.

**10.** Procédé de réalisation d'un textile selon les revendications 6 à 9 comprenant les étapes suivantes :

- disposer d'un textile ;
- mettre en contact ce textile avec une solution ou une dispersion concentrée de 2 à 35% massique en huile d'eucalyptus citronnée et /ou en éthyl 3-[acetyl(butyl)amino]propanoate, à raison de 2 à 150 mL de solution ou dispersion / m$^2$, pour obtenir un textile imprégné de 700 à 3 000 mg/m$^2$ d'huile d'eucalyptus citronnée et /ou d'éthyl 3-[acetyl(butyl)amino]propanoate.

**11.** Procédé selon la revendication 10 **caractérisé en ce que** la mise en contact est réalisée par pulvérisation sur le textile ou par trempage du textile.

**12.** Procédé selon la revendication 11 **caractérisé en ce que** la solution ou la dispersion d'huile d'eucalyptus citronnée et/ou d'éthyl 3-[acetyl(butyl)amino]propanoate est appliquée à raison de 0,2 à 5 mL/ de solution ou dispersion / 75 à 1 200 cm$^2$ de surface à chaque vaporisation.

**13.** Procédé selon les revendications 10 à 12 comprenant un traitement contre les UVs avant ou simultanément à la mise en contact.

**14.** Utilisation du textile selon l'une quelconque des revendications 6 à 9 pour réaliser un vêtement, une casquette, un chapeau, un tour de cou, une chaussette, un manchon, un bracelet, un foulard, une chaussure, un bonnet, un paréo, une paire de gants, une étole, une toile de tente, une bâche, une couverture, un drap, une nappe, une ombrelle, un parasol, une tenture, un rideau, une nappe, une serviette.

**15.** Utilisation d'un textile imprégné de 700 à 3 000mg/m$^2$ d'huile d'eucalyptus citronnée et/ou d'éthyl 3-[acetyl(butyl)amino]propanoate comme protection contre les insectes ou les acariens.


**Patentansprüche**

**1.** Verwendung eines Insektenabweisers, ausgewählt aus dem zitrushaltigen Eukalyptusöl und/oder Ethyl 3-[Acetyl(butyl)amino]propanoat, um in einer einzigen Behandlung eine Textilie mit effizient insektenabweisender Wirkung für mindestens 12 Stunden zu erhalten, wobei der Insektenabweiser in der Textilie in einer Menge von 700 bis 3000 mg/m$^2$ vorhanden ist.

**2.** Verwendung nach Anspruch 1, **dadurch gekennzeichnet, dass** die insektenabweisende Wirkung für mindestens 24 Stunden und vorzugsweiser bis zu 7 Tagen effizient ist.

3. Verwendung nach einem der vorangehenden Ansprüche, **dadurch gekennzeichnet, dass** der Insektenabweiser in der Textile in einer Menge von 1000 bis 2500 mg/m$^2$ vorhanden ist.

4. Verwendung nach einem der vorangehenden Ansprüche **dadurch gekennzeichnet, dass** das zitrushaltige Eukalyptusöl 50 bis 80 Ma% p-Menthan-3,8-diol enthält.

5. Verwendung nach einem der vorangehenden Ansprüche, **dadurch gekennzeichnet, dass** die insektenabweisende Wirkung gegen Insekten oder Milben effizient ist, insbesondere gegen Zecken oder Mücken wie die der Art *Aedes,* beispielsweise *Aedes aegypti* oder *Aedes albopictus.*

6. Textilie, imprägniert mit 700 bis 3000 mg/m$^2$ zitrushaltigem Eukalyptusöl und/oder Ethyl 3-[Acetyl(butyl)amino]propanoat.

7. Textilie nach Anspruch 6, **dadurch gekennzeichnet dass** sie mit 1000 bis 2500 mg/m$^2$ zitrushaltigem Eukalyptusöl und/oder Ethyl 3-[Acetyl(butyl)amino]propanoat imprägniert ist.

8. Textilie nach einem der Ansprüche 6 oder 7, **dadurch gekennzeichnet, dass** sie aus Polyamid, Leinen, Hanf, Polyester, Nylon, Acryl, Elastan, Lycra, Baumwolle, Seide, Viskose, Modal, Cupro, Celluloseacetat und deren Mischungen ausgewählt ist.

9. Textile nach einem der vorangehenden Ansprüche 6 bis 8, **dadurch gekennzeichnet, dass** sie eine flächenbezogene Masse von 5 bis 1000 g/m$^2$ aufweist.

10. Verfahren zur Herstellung einer Textilie nach den Ansprüchen 6 bis 9, umfassend die folgenden Schritte:

   - Bereitstellen einer Textilie;
   - Inkontaktversetzen dieser Textilie mit einer Lösung oder Dispersion, deren Konzentration an zitrushaltigem Eukalyptusöl und/oder an Ethyl 3-[Acetyl(butyl)amino]propanoat von 2 bis 35 Ma% beträgt, mit einer Menge von 2 bis 150 mL Lösung oder Dispersion/m$^2$, um eine mit 700 bis 3000 mg/m$^2$ zitrushaltigem Eukalyptusöl und/oder Ethyl 3-[Acetyl(butyl)amino]propanoat imprägnierte Textile zu erhalten.

11. Verfahren nach Anspruch 10, **dadurch gekennzeichnet, dass** das Inkontaktversetzen durch Zerstäuben auf die Textilie oder durch Eintauchen der Textile durchgeführt wird.

12. Verfahren nach Anspruch 11, **dadurch gekennzeichnet, dass** die Lösung oder die Dispersion zitrushaltigen Eukalyptusöls und/oder Ethyl 3-[Acetyl(butyl)amino]propanoat in einer Menge von 0,2 bis 5 mL/Lösung oder Dispersion/75 bis 1200 cm$^2$ Oberfläche bei jedem Zerstäuben aufgetragen wird.

13. Verfahren nach den Ansprüchen 10 bis 12, umfassend eine Behandlung gegen UV vor oder gleichzeitig mit dem Inkontaktversetzen.

14. Verwendung der Textilie nach einem der Ansprüche 6 bis 9 zur Herstellung eines Bekleidungsstücks, einer Kappe, eines Huts, eines Halsbands, eines Strumpfs, eines Muffs, eines Armbands, eines Tuchs, eines Schuhs, einer Mütze, eines Pareos, eines Handschuhpaars, einer Stola, einer Zeltbahn, einer Plane, einer Decke, eines Lakens, eines Tuchs, eines Sonnenschutzes, eines Sonnenschirms, eines Vorhangs, einer Gardine, eines Tischtuchs, eines Handtuchs.

15. Verwendung einer mit 700 bis 3000mg/m$^2$ zitroniertem Eukalyptusöl und/oder Ethyl 3-[Acetyl(butyl)amino]propanoat als Schutz gegen Insekten oder Milben imprägnierten Textilie.

**Claims**

1. Use of an insect repellent selected from lemon eucalyptus oil and/or ethyl 3-[acetyl(butyl)amino]propanoate to obtain, in a single treatment, a textile with an insect repellent effect which is effective for at least 12 hours, the insect repellent being present in the textile in an amount of 700 to 3000 mg/m$^2$.

2. Use as claimed in claim 1 **characterized in that** the insect repellent effect is effective for at least 24 hours, and more preferentially up to 7 days.

3. Use as claimed in any one of the preceding claims **characterized in that** the insect repellent is present in the textile in an amount of 1000 to 2500 mg/m$^2$.

4. Use as claimed in any one of the preceding claims **characterized in that** the lemon eucalyptus oil comprises from 50 to 80 wt% p-menthane-3,8-diol.

5. Use as claimed in any one of the preceding claims **characterized in that** the insect repellent effect is effective against insects or mites, in particular ticks or mosquitoes such as those of the genus *Aedes,* for example *Aedes aegypti* or *Aedes albopictus.*

6. A textile impregnated with 700 to 3000 mg/m$^2$ of lemon eucalyptus oil and/or ethyl 3-[acetyl(butyl)amino]propanoate.

7. The textile as claimed in claim 6 **characterized in that** it is impregnated with 1000 to 2500 mg/m$^2$ of lemon eucalyptus oil and/or ethyl 3-[acetyl(butyl)amino]propanoate.

8. The textile as claimed in any one of claims 6 or 7 **characterized in that** it is selected from polyamide, flax, hemp, polyester, nylon, acrylic, elastane, Lycra, cotton, silk, viscose, modal, cupro, cellulose acetate and mixtures thereof.

9. The textile as claimed in any one of the preceding claims 6 to 8 **characterized in that** it has a mass per unit area of 5 to 1000 g/m$^2$.

10. A process for producing a textile as claimed in claims 6 to 9 comprising the following steps:

    - providing a textile;
    - bringing this textile into contact with a concentrated solution or dispersion of 2 to 35 wt% lemon eucalyptus oil and/or ethyl 3-[acetyl(butyl)amino]propanoate, in an amount of 2 to 150 mL of solution or dispersion/m$^2$, to obtain a textile impregnated with 700 to 3000 mg/m$^2$ of lemon eucalyptus oil and/or ethyl 3-[acetyl(butyl)amino] propanoate.

11. The process as claimed in claim 10 **characterized in that** the bringing into contact is carried out by spraying on the textile or by dipping the textile.

12. The process as claimed in claim 11 **characterized in that** the solution or dispersion of lemon eucalyptus oil and/or ethyl 3-[acetyl(butyl)amino]propanoate is applied in an amount of 0.2 to 5 mL/ of solution or dispersion / 75 to 1200 cm$^2$ of surface area at each spraying.

13. The process as claimed in claims 10 to 12 comprising a treatment against UV radiation before or simultaneously with the contact.

14. Use of the textile as claimed in any one of claims 6 to 9 for making a garment, a cap, a hat, a neckband, a sock, a sleeve, a bracelet, a scarf, a shoe, a hat, a pareo, a pair of gloves, a stole, a tent cloth, a tarpaulin, a blanket, a sheet, a tablecloth, an umbrella, a parasol, a hanging, a curtain, a tablecloth, a towel.

15. Use of a textile impregnated with 700 to 3000 mg/m$^2$ of lemon eucalyptus oil and/or ethyl 3-[acetyl(butyl)amino] propanoate as protection against insects or mites.

**EP 3 421 660 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3040260
- CN 106480740